# EUROPEAN PATENT APPLICATION

(11) **EP 1 384 729 A1**
(43) Date of publication of application: **28.01.2004**
(21) Application number: 02102060.7
(22) Date of filing: 25.07.2002
(51) Int. Cl.: C08F 2/38, C08F 293/00

(54) **Process for the radical coplymerisation of alpha-olefins with vinyl monomers**

(71) Applicant: Dutch Polymer Institute, 5600 AX Eindhoven (NL)
(72) Inventor: VENKATESH, Rajan, 5632 PC, EINDHOVEN (NL); KLUMPERMAN, Lubertus, 2351 EA, LEIDERDORP (NL)
(74) Representative: Jacobs, Monique S.N.

(57) **Abstract**

The invention involves a process for the copolymerisation of at least one α-olefin with at least one vinyl monomer comprising at least one hetero atom chosen from the group consisting of Si, O, N, and halogen, and/or at least one optionally substituted aryl group, which vinyl monomer is susceptible to free-radical polymerization (vinyl monomer R). Said copolymerization is performed in the presence of a source of free radicals and at least one thiocarbonylthio compound comprising the structural unit-C(=S)-S-. The invention further involves a copolymer comprising at least one α-olefin and at least one vinyl monomer R, which has an M_{w}/Mₙ smaller than 1.5.

## Description

The invention relates to a process for the copolymerisation of at least one α-olefin with at least one vinyl monomer comprising at least one hetero atom chosen from the group consisting of Si, O, N, and halogen, and/or at least one optionally substituted aryl group, which vinyl monomer is susceptible to free-radical polymerisation (hereinafter abbreviated as "vinyl monomer R"). The invention also relates to a copolymer comprising at least one α-olefin and at least one vinyl monomer R.

Copolymers of an α-olefin with for example a polar vinyl monomer, having various architectures remain an ultimate goal in polyolefin engineering. Since, of the many permutations available for modifying the properties of polyolefins, the incorporation of functional groups into an otherwise nonpolar material is substantial. Polar groups exercise control over important properties such as toughness, adhesion, barrier properties, surface properties, for example paintability and printability, solvent resistance, miscibility with other polymers, and rheological properties. In order to realise structurally well-defined linear copolymers comprised of nonpolar and polar monomer units by the copolymerisation of two or more monomers, the amount of the monomers in the copolymer and distribution of comonomer in the copolymer must be controllable. Aside from monomer concentration, the other important determinant in this process is the relative reactivity of the monomers.

The copolymerisation of α-olefins, i.e. ethylene, 1-hexene and norbornene with methacrylate in the presence of a neutral palladium pyrrole-imine complex is disclosed in G. Tian et al., Macromolecules, 34 (2001), p. 7656.

A drawback of the known process is, that is the resulting copolymers have a relatively broad molecular weight distribution (defined as the weight average molecular weight devided by the number average molecular weight (M_{w}/Mₙ), measured by Gel Permeation Chromatography (GPC)). The M_{w}/Mₙ of such polymers is usually larger than 2.0.

The aim of the present invention is to provide a process for the copolymerization of at least one α-olefin with at least one vinyl monomer R, the process resulting in a copolymer having a narrow molecular weight distribution, i.e. having an M_{w}/Mₙ typically smaller than 1.5.

Surprisingly, this is achieved according to the present invention by performing the copolymerization in the presence of a source of free radicals and at least one thiocarbonylthio compound comprising the structural unit ―C(=S)-S-, which acts as a chain transfer agent in said copolymerization.

Such a copolymerization, in which at least one thiocarbonylthio compound comprising the structural unit ―C(=S)-S- is used as a chain transfer agent, is known per se as a so-called Reversible Addition Fragmentation Chain Transfer Polymerization (RAFT) process. RAFT processes are described in for example WO98/01478 and WO99/31144.

The thiocarbonylthio compound comprising the structural unit ―C(=S)-S- is preferably of formula (I) or (II):

(Z-C(=S)-S)ₚ-R (I)

Z'-(C(=S)-S-R)ₘ (II

wherein
- Z is selected from the group comprising hydrogen, halogen, optionally substituted alkyl, optionally substituted aryl, optionally substituted heterocyclyl, optionally substituted amine (-NR'₂), optionally substituted alkylthio (-S-R'), optionally substituted alkoxycarbonyl, optionally substituted aryloxycarbonyl (-COOR'), carboxy (-COOH), optionally substituted acyloxy (-O₂CR') optionally substituted carbamoyl (-CONR'₂), cyano (-CN), dialkyl- or diaryl- phosphonato [-P(=O)OR'₂], dialkyl- or diaryl-phosphinato [-P(=O)R'₂], and a polymer chain formed by any mechanism;
- Z' is a m-valent moiety derived from a member of the group comprising optionally substituted alkyl, optionally substituted aryl and a polymer chain; where the connecting moieties are selected from the group that comprises aliphatic carbon, aromatic carbon, and sulfur;
- R is a free-radical leaving group that initiates free radical polymerization;
- R' is selected from the group comprising optionally substituted C1-C18 alkyl, C2-C18 alkenyl, aryl, heterocyclyl, aralkyl, alkaryl, wherein the substituents are independently selected from the group that comprises epoxy, hydroxy, alkoxy acyl, acyloxy, carboxy (and salts), sulfonic acid (and salts), alkoxy- or aryloxycarbonyl, isocyanato, cyano, silyl, halo, and dialkylamino;
- p is an integer with p ≥ 1;
- m is an integer with m ≥ 2.

Preferably R is selected from the group comprising optionally substituted alkyl; an optionally substituted saturated, unsaturated or aromatic carbocyclic or heterocyclic ring; optionally substituted alkylthio; optionally substituted alkoxy; optionally substituted dialkylamino; an organometallic species; and a polymer chain prepared by any polymerization mechanism. When p ≥ 2, R is a p-valent moiety derived from a member of the group consisting of optionally substituted alkyl, optionally substituted aryl, and a polymer chain; where the connecting moieties are selected from the group consisting of aliphatic carbon, aromatic carbon, silicon, and sulfur. More preferably R is selected from the group comprising -C(CH₃)₂(CN), -C(C₆H₅)(CH₃)R"', and C(COOR"")(CH₃)R"', wherein R"' = H or CH3 and R"" = any substituent that can be placed in this position via esterification of a suitable alcohol.

Preferably Z is selected from the group comprising:

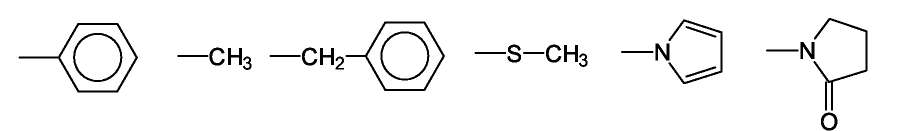

The thiocarbonylthio compound comprising the structural unit -C(=S)-S- acts as a chain transfer agent in the process according to the invention and has a chain transfer constant in the range of from 0.1 to 5000, preferably in the range of from 1 to 2000, and more preferably in the range from 10 to 500. Herein, chain transfer constant (C_{T}), is defined as the ratio of the transfer and propagation rate coefficients (G. Odian, Principles of Polymerization, 3rd edition, John Wiley & Sons Inc., New York (1991), page 244):

C_{T} = kₜᵣ/ kₚ

where:
- kₜᵣ =: rate coefficient for transfer
- kₚ =: rate coefficient for propagation

If the C_{T} of the thiocarbonylthio compound exceeds the upper limit of the above range substantially no polymerization occurs; if it falls below the lower limit it is not possible to produce polymers having a narrow molecular weight distribution.

Free radicals can be subdivided into initiating radicals and propagating radicals. Initiating radicals are free radicals that are derived from the free radical source which add to a monomer to produce propagating radicals. Propagating radicals are radical species that have added to one or more monomer units and are capable of adding further monomer units.

The free radicals may be obtained by any suitable method of generating free radicals, such as the thermally induced homolytic scission of a suitable compound(s) (thermal initiators such as peroxides, peroxyesters, or azo compounds), the spontaneous generation from monomer (e.g., styrene), redox initiating systems, photochemical initiating systems or high energy radiation such as electron beam, X- or gamma-radiation. The free radical source is chosen such that under the reaction conditions there is no substantial adverse interaction of the free radical source and/or the initiating radicals produced thereof with the transfer agent under the conditions of the experiment. The free radical source should also have the requisite solubility in the reaction medium or monomer mixture.

Thermal initiators are chosen to have an appropriate half life at the temperature of polymerization. These initiators can include one or more of the following compounds: 2,2'-azobis(isobutyronitrile), 2,2'-azobis(2-cyano-2-butane), dimethyl 2,2'-azobisdimethylisobutyrate, 2,2'-azobis-(2,4-dimethyl valeronotrile), 4,4'-azobis(4-cyanopentanoic acid), 1,1 '-azobis(cyclohexanecarbonitrile), 2-(t-butylazo)-2-cyanopropane, 2,2'- azobis[2-methyl-N-( 1,1 )-bis(hydoxymethyl)-2-hydroxyethyl] propionamide, 2,2'-azobist2-methyl-N-hydroxyethyl)]-propionamide, 2,2'-azobis(N,N'-dimethyleneisobutyramidine) dihydrochloride, 2,2'-azobis (2-amidinopropane) dihydrochloride, 2,2'-azobis(N,N'-dimethyleneisobutyramine), 2,2'-obis(2-methyl-N-[l,l-bis(hydroxymethyl)-2-hydroxyethyl propionamide), 2,2 '-azobis(2-methyl-N-[l,l-bis(hydroxymethyl) ethyl] propionamide), 2,2'-azobis [2-methyl N-(2-hydroxyethyl) propionamide], 2,2'-azobis(isobutyramide) dihydrate,2,2'-azobis(2,2,4-trimethylpentane), 2,2'-azobis(2-methylpropane), t-butyl peroxyacetate, t-butyl peroxybenzoate, t-butyl peroxyoctoate, t-butyl peroxyneodecanoate, t-butylperoxy isobutyrate, t-amyl peroxypivalate, t-butyl peroxypivalate, di-isopropyl peroxydicarbonate, dicyclohexyl peroxydicarbonate, dicumyl peroxide, dibenzoyl peroxide, dilauroyl peroxide, potassium peroxydisulfate, ammonium peroxydisulfate, di-t-butyl hyponitrite, dicumyl hyponitrite.

Photochemical initiator systems are chosen to have the requisite solubility in the reaction medium or monomer mixture and have an appropriate quantum yield for radical production under the conditions of the polymerization. Examples include benzoin derivatives, benzophenone, acyl phosphine oxides, and photoredox systems.

Redox initiator systems are chosen to have the requisite solubility in the reaction medium or monomer mixture and have an appropriate rate of radical production under the conditions of the polymerization; these initiating systems can include combinations of the following oxidants and reductants: oxidants: potassium peroxydisulfate, hydrogen peroxide, t-butyl hydroperoxide; reductants: iron(ll), titanium(lll), potassium thiosulphite, potassium bisulphite.

Other suitable initiating systems are described in recent literature. See, for example, Moad and Solomon "The Chemistry of Free Radical Polymerization", Pergamon Press, London, 1995, p. 53-95.

In the process according to the invention, preferably a thermal initiator is applied, more preferably a thermal initiator chosen from the group comprising 2,2'-azobis(isobutyronitrile), 2,2'-azobis-(2,4-dimethyl valeronotrile), 1,1'-azobis(cyclohexanecarbonitrile). Photochemical initiators require a light source for radical generation and redox initiators more preferably employed in water based systems (example emulsion polymerisation). Hence, for the systems studied, thermal initiators are used since they are relatively easy to handle and possess reasonable rates of decomposition under the experimental conditions.

The process according to the invention involves the copolymerisation of at least one α-olefin with at least one vinyl monomer R.

Herein an α-olefin is defined as a compound with formula CH₂=CH-R'" in which R"' represents for example a linear or branched (hetero)alkyl with for example 1-24 carbon atoms, which is optionally substituted with one or more substituents which are inert under the chosen reaction conditions. Suitable examples of such substituents are a hydroxy group, an amine group, an amide group, a thiol group, a halogen, an alkoxy group with for example 1 to 20 C atoms, a (hetero)aryl group with for example 1 to 20 C atoms and an aryloxy group with for example 1 to 20 C atoms. Preferably R"' represents an unsubstituted linear alkyl with 1-10 carbon atoms, more preferably an unsubstituted linear alkyl with
2-6 carbon atoms.

The vinyl monomer R is generally of formula (III):

CH₂=CXY (III)

wherein
- X is selected from the group consisting of hydrogen, halogen, optionally substituted C1 -C4 alkyl wherein the substituents are independently selected from the group that consists of hydroxy, alkoxy, aryloxy (OR"), carboxy, acyloxy, aroyloxy (O₂CR"), alkoxy- carbonyl and aryloxy-carbonyl (CO₂R");
- Y is selected from the group consisting of hydrogen, R", CO₂H, CO₂R", COR', CN, CONH₂, CONHR", CONR"₂, O₂CR", OR" and halogen;
- R" is selected from the group consisting of optionally substituted C1-C18 alkyl, C2-C18 alkenyl, aryl, heterocyclyl, aralkyl, alkaryl wherein the substituents are independently selected from the group that consists of epoxy, hydroxy, alkoxy acyl, acyloxy, carboxy (and salts), sulfonic acid (and salts), alkoxy- or aryloxycarbonyl, isocyanato, cyano, silyl, halo, and dialkylamino.

Monomers CH₂=CXY as used herein include acrylate and methacrylate esters, acrylic and methacrylic acid, styrene, acrylamide, methacrylamide, and methacrylonitrile, mixtures of these monomers, and mixtures of these monomers with other monomers. As one skilled in the art would recognize, the choice of comonomers is determined by their steric and electronic properties. The factors which determine copolymerizability of various monomers are well documented in the art. For example, see: R.Z. Greenley, Polymer Handbook 3rd Edition (Brandup, J., and lmmergut, E.H Eds.) Wiley, New York, 1989, p ll/53.

In another embodiment, vinyl monomer R is selected from the group comprising maleic anhydride, N-alkylmaleimide, N-arylmaleimide, dialkyl fumarate and cyclopolymerizable monomers.

As a general guide in choosing conditions for the process according to the invention, which aims at copolymers with a narrow molecular weight distribution, i.e. having an M_{w}/Mₙ typically smaller than 1.5, the concentration of initiator(s) and other reaction conditions (e.g. solvents, reaction temperature and pressure, surfactants, if any, and other additives) should be chosen such that the molecular weight of the copolymer formed in the absence of the thiocarbonylthio compound is at least twice that formed in its presence. In polymerizations where radical-radical termination is solely taking place by disproportionation, this equates to choosing an initiator concentration such that the total moles of initiating radicals formed during the polymerization is in the range of 0.000001 to 0.5 times that of the total moles of the thiocarbonylthio compound. More preferably, conditions should be chosen such that the molecular weight of the copoymer formed in the absence of the thiocarbonylthio compound is at least 5-fold that formed in its presence ([initiating radicals] / [thiocarbonylthio compound] < 0.2). By varying the total number of moles of the thiocarbonyl compound to the total number of moles of the free radical initiator added to a polymerization medium, the molecular weight distribution (M_{w}/Mₙ) of the polymer according to the invention can be controlled. Generally, a narrower molecular weight distribution is obtained when the molar ratio thiocarbonyl compound : free radical initiator is increased. Preferably, the molar ratio thiocarbonyl compound : free radical initiator is chosen such that the polymer has an M_{w/}Mₙ smaller than about 1.5.

The total monomer concentration, i.e. [α-olefin + vinyl monomer R], may vary between broad ranges and depends on e.g. the type of monomers used. Usually the total monomer concentration is between 1 mol/l and bulk, preferably between 3 and 8 mol/l.

The molar ratio α-olefin : vinyl monomer R is dependent on e.g. the desired amounts of each of the comonomers in the copolymers and is usually between 5:95 and 75:25, preferably between 25:75 and 50:50.

The molar ratio thiocarbonylthio compound : (α-olefin + vinyl monomer A) determines, among other reaction parameters (such as the temperature), the molecular weight of the product, and must be between 1:5 and 1:1000, preferably between 1:7 and 1:500, more preferably between 1:10 and 1:100.

By varying the rate of addition of the monomers or by varying the sequence in which the monomers are added to the copolymerization process, the process according to the invention may be used to produce block and multi-block and gradient copolymers. By selecting the functionalities desired, an end-functional polymer having specific end functionalities can readily be produced.

If desired, it is possible to produce a copolymer with a broad, yet controlled, molecular weight distribution or a multimodal molecular weight distribution by controlled addition of the thiocarbonylthio compound over the course of the copolymerization process according to the invention.

The process according to the invention may be carried out in emulsion, solution or suspension in either a batch, semi-batch, continuous or feed mode. Otherwise conventional procedures can be used to produce copolymers with a narrow molecular weight distribution. If (a) solvent(s) is/are used, non-polar or less-polar solvents are preferred, for example aromatic hydrocarbons, for example optionally substituted benzene, toluene or xylene. However, more polar solvents, for example ketones (for example acetone), esters (for example ethylene carbonate, ethyl acetate), ethers (for example diphenyl ether, tetrahydrofuran), and N,N-dimethylformamide may also be employed. In fact, due to the radical nature of the copolymerization reaction, even protic solvents such as alcohols and water may be employed.

The process is performed under the conditions typical for conventional free radical polymerization. It is preferably carried out at a reaction temperature between -20 and 200 °C, more preferably between 40 and 160 °C. At temperatures lower than -20 °C the reaction will be relatively slow, while at temperatures higher than 200 °C the number of side reaction increase, resulting in a broader molecular weight distribution.

The pressure at which the process according to the invention is carried out is not particularly critical and depends on for example the monomers and solvent used and the reaction temperature. When higher boiling monomers are applied, for practical reasons the process is preferably carried out at atmospheric pressure.

The reaction time is not particularly critical and is dependent on for example the types and amounts of the thiocarbonylthio compound, the free radical source, the monomers used, the temperature and the solvent. Usually a reaction time of at least 1 hour to 4 days is applied, more preferably a reaction time between 2 and 48 hours, most preferably a reaction time between 3 and 24 hours.

In WO98/01478 a polymerisation process based on RAFT is described. In the above mentioned patent application, however, the (co)polymerisation of an α-olefin with a vinyl monomer R is not disclosed. In fact, α-olefins are commonly known to undergo degradative chain transfer of allylic hydrogen atoms when involved in free radical reactions. The stable radicals derived from the α-olefin monomer after such chain transfer reactions are slow to reinitiate and prone to terminate. It could therefore not be expected that α-olefins could be copolymerised with vinyl monomers R by using the method according to the invention.

The invention also relates to a copolymer comprising at least one α-olefin and at least one vinyl monomer R. Such copolymers are disclosed in for example G. Tian et al., Macromolecules, 34 (2001), p. 7656.

A drawback of the known copolymers is, that they have a relatively large M_{w}/Mₙ, i.e. typically larger than 2.0.

The aim of the invention is to provide a copolymer of an α-olefin and a vinyl monomer R with an M_{w}/Mₙ smaller than 1.5.

The invention surprisingly provides a new copolymer of an α-olefin and a vinyl monomer R having an M_{w}/Mₙ smaller than 1.5. Such a polymer is for example obtainable by using the method according to the invention. Further, end functionalized (co)polymers, block and multiblock (co)polymers, gradient (co)polymers, star (co)polymers, and graft / branched (co)polymers can also be obtained.

The Mₙ of the copolymer according to the invention may vary within broad ranges and is preferably between 500 and 200,000 g/mol, more preferably between 800 and 100,000 g/mol, most preferably between 1000 and 75,000 g/mol, as measured by GPC.

The amount of α-olefin and vinyl monomer R in the copolymer according to the invention may also vary within broad ranges, the α-olefin : vinyl monomer R molar ratio in the copolymer preferably being between 95:5 and 5:95, more preferably between 80:20 and 20:80, and most preferably between 50:50 and 25:75.

Both the Mₙ and the α-olefin : vinyl monomer R molar ratio can be chosen to fit the requirements of the application in which the copolymer according to the invention is used. This can be done in the process according to the invention by for example, varying the ratio of the total number of moles of the thiocarbonylthio compound to the total number of moles of the monomer added (α-olefin + vinyl monomer R), so as to control the Mₙ. Further, by varying the ratio of the total number of moles of the thiocarbonylthio compound to the total number of moles of the free radical initiator added to the polymerization medium, the molecular weight distribution of the resulting polymer can be controlled. Also, the molar ratio of the α-olefin : vinyl monomer R in the feed can be varied to control the molar ratio of the α-olefin : vinyl monomer R in the copolymer according to the invention.

The thiocarbonylthio is generally incorporated in the copolymer according to the invention. Usually the Z-C(=S)-S- or Z'-C(=S)-S- moiety is bound to one end of the polymer chain, while the leaving group (R) is bound to the other end. But in some cases, where the free radical initiator employed has a longer half life at the performed reaction temperature and if the initiator radical reinitiates faster as compared to the leaving group R radical, then the Z-C(=S)-S- or Z'-C(=S)-S- moiety is bound to one end of the polymer chain and the initiator radical is bound to the other end. The mid-chain radical termination during the RAFT polymerization is a topic of great debate in the scientific community. If this occurs then a polymer chain containing at least 2 or more initiating groups (for example the free radical initiator group and the leaving group R are on either ends of the polymer chain) and the Z-C(=S)-S- or Z'-C(=S)-S- moiety is present within the polymer chain is obtained. R and Z' may be multifunctional and as such be bound to more than one polymer chain in the polymer according to the invention.

The copolymerization according to the invention is a living copolymerization, i.e. a copolymerization in which the copolymer chains grow simultaneously throughout the reaction. One of the implications of this copolymerization mechanism is that, in contrast to conventional free radical polymerization, in which the copolymer chains grow sequentially, the chemical composition of the polymer chains will all be similar, while the chemical composition in each chain may vary significantly over the position on the copolymer chain. In general, however, the distribution of the α-olefin over the copolymer chain will be relatively narrow.

The invention also relates to the use of the copolymer according to the invention in coating compositions.

In the automotive industry, polyolefins, preferably polypropylene and its copolymers, are used in bumpers and other exterior parts, which can be coated with a coating composition. As such coating compositions are usually relatively polar, they are generally not sufficiently compatible with the non-polar polyolefin. Therefore, parts made of polyolefin, generally polypropylene or its copolymers, are usually subjected to some form of pre-treatment before coating to increase their polarity.

The problem of the known method is that a pretreatment step of the substrate is necessary.

It has now surprisingly been found that such pre-treatment can be omitted by using a coating composition comprising the copolymer according to the invention. As the copolymer according to the invention contains an α-olefin, it will be compatible with parts made of polyolefin. Hence, pre-treatment of these plastic parts would not be required, which in turn would lead to massive cost savings and improved quality of the coating of these parts.

On the other hand, the copolymer according to the invention can also be used in coating compositions for the coating of polar substrates. By using a copolymer according to the invention which contains both an α-olefin and a polar vinyl monomer R good adhesion to e.g. metal surfaces can be obtained due to the polar groups. At the same time, a coating composition comprising a copolymer according to the invention may offer good protective properties due to the low surface energy of the α-olefin part of the copolymer. Examples of copolymers suitable for the use in coating compositions are copolymers of α-olefins with methyl (meth)acrylate, glycidyl (meth) acrylate, hydroxyethyl (meth)acrylate, and styrene.

The invention further relates to the use of the copolymer according to the invention as a compatibilizer.

The copolymer according to the invention can be used as a compatibilizer in polymer blends comprising one or more relatively polar (co)polymers, for example poly(methylmethacrylate), polyacrylate, styrene maleic anhydride copolymer, and polystyrene, and one or more relatively apolar (co)polymers, for example polypropylene and polyethylene. Such blends are for example applied to combine the positive properties of the relatively polar (co)polymer(s), for example hardness, scratch resistance, chemical resistance, dimensional stability, and heat resistance, with the positive properties of the relatively apolar (co)polymer(s), for example tensile strength, low density, and relatively low cost price.

Said copolymer can also be used as a tie resin in multi-layer films, offering the possibility to combine the barrier properties of at least two films, for example of a film comprising one or more relatively apolar (co)polymer(s), for example polypropylene and/or polyethylene, and a film comprising one or more relatively polar (co)polymers, for example ethene-vinyl alcohol copolymer.

The invention is further illustrated by the following non-limiting Examples.

### Examples

### Starting materials

Methyl methacrylate ("MMA", Aldrich, 99+%), styrene ("STY", Aldrich, 99+%), and 1-octene (Aldrich, 98%) were distilled and stored over molecular sieves.

*p*-Xylene (Aldrich, 99+% HPLC grade) was stored over molecular sieves and used without further purification.

2,2'-azobis(isobutyronitrile) ("AlBN", Merck), 2,2'-azobis-(2,4-dimethyl valeronotrile) ("V-65", Wako Chemicals), 1,1'-azobis(cyclohexanecarbonitrile) ("Vazo 88", Dupont), tetrahydrofuran ("THF", Aldrich, A(nalytical) R(eagent)), 1,4-dioxane (Aldrich, AR), and dimethyl formamide ("DMF", Aldrich, AR) were used as received.

2-Cyanopropyl-2-yl dithiobenzoate was synthesised according to the method described in H. de Brouwer, PhD Thesis, Eindhoven University of Technology (2001) page 76, 80-81. A detailed description is given below.

### Synthesis of 2-cyanopro-2-yl dithiobenzoate

Phenylmagnesium bromide was prepared from bromobenzene and magnesium turnings. A three-necked 2L round bottom flask was fitted with two 500 ml dropping funnels. All glassware was dried before use at 130 °C overnight. Tetrahydrofurane ("THF", Biosolve, PA [109-99-9]) was freshly distilled from lithium aluminium hydride (Aldrich, 95% [16853-85-3]). 100 ml of THF was put in the round bottom flask while 500 ml was put in one of the dropping funnels. A few iodine crystals (Aldrich, 99+ % [7553-56-2]) and 20 g (0.82mol) of magnesium turnings (Aldrich, 98% [7439-95-4]) were added to the flask and the other dropping funnel was filled with 125.6 g (0.80mol) of bromobenzene (Aldrich, 99% [108-86-1]). Approximately 10% of the bromobenzene was allowed to flow into the magnesium/THF mixture, which was then carefully warmed with a powerful heat gun (Bosch PHG 630-2 LCE, 2000W) until the reaction started. This was indicated by the sudden disappearance of the brownish iodine color. Both bromobenzene and THF were then added dropwise at such rates that the reaction kept on going and that the temperature remained between 30 and 35 °C. An ice bath was used to remove the heat of reaction. Upon completion of the addition, the mixture was left to stir until no energy was produced anymore. The mixture possessed the dark greenish translucent shade of black, typical for such Grignard compounds. One of the empty dropping funnels was recharged with 61 g (0.80 mol) of anhydrous carbon disulfide (Aldrich, 99+% [75-15-0]). The ice bath was reapplied to keep the temperature below 35 °C, while carbon disulfide was added. Upon formation of the dithiobenzoate salt, the reaction mixture turned to a dark opaque brown.

### Dithiobenzoic acid:

Once the reaction of phenyl magnesium bromide and carbon disulfide had completed, water (50ml) was added slowly and carefully to the cooled reaction mixture with the aim of neutralizing the Gringnard coumpound. The mixture was then concentrated on a rotary evaporator and the resulting solution was diluted with water. The mixture was filtered to remove insoluble magnesium salts and subsequently treated with concentrated hydrochloric acid until the brown color had disappeared completely and pure dithiobenzoic acid separated from the resulting pink opaque liquid in the form of a purple oil. The pink liquid is extracted twice with dichloromethane and this organic phase was combined with the purple oil. Removal of the dichloromethane under reduced pressure yielded dithiobenzoic acid.

### bis(thiobenzoyl) disulfide (1):

208 g (1.36mol) of dithiobenzoic acid was mixed with 200 ml of ethyl acetate (Biosolve [141-78-6]). A few crystals of iodine (Aldrich, 99+% [7553-56-2]) were added to the solution and dimethylsulfoxide (53 g, 0.68 mol, Acros, [67-68-5]) was added dropwise. The mixture was kept in the dark overnight, though it was expected that the reaction had reached completion within an hour. Ethyl acetate was then removed under reduced pressure to yield the desired product in 90 % yield (186 g, 0.61 mol). When the reaction was performed in a concentrated ethanol solution, the product crystallized upon formation in shiny red flakes. A second, considerably smaller batch was obtained by cooling the ethanol solution to -20°C.

Bis(thiobenzoyl) disulfide is characterized by the following signals in the 1 H NMR spectrum, δ (ppm): 7.45 (dd, 4H, meta position), 7.61 (m, 2H, para position), 8.09 (d, 4H, ortho position).

### 2-cyanoprop-2-yl dithiobenzoate (2):

Bis(thiobenzoyl) disulfide (180 g, 0.59 mol) and 2,2'-azobis(isobutyronitril) (135 g, 0.83 mol, Wako Chemicals) are dissolved in ethyl acetate. The mixture is brought to reflux under an argon atmosphere for 30 minutes. Then the solution is then stirred overnight at 65 °C. Ethyl acetate is removed under reduced pressure to give a red oil which was subjected to flash chromatography using pentane:heptane:diethyl ether as eluent (9:9:2). The red product which was obtained in 59 % yield (154 g, 0.69 mol), crystallized when stored at ―20 °C and is a red oil at ambient temperature.

The ¹H NMR spectrum showed the following peaks, δ (ppm): 1.93 (s, 6H, CH 3 ), 7.40 (m, 2H, meta), 7.55 (m, 1H, para), 7.90 (d, 2H, ortho). The major byproduct of this synthesis is the combination product of two AIBN derived radicals (2,3-dicyano-2,3-dimethyl-butane), which gives a singlet at 1.55 ppm.

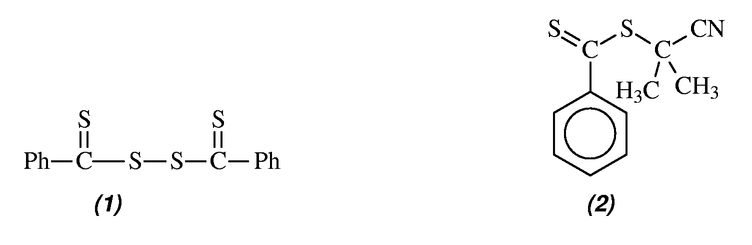

### Analysis

Monomer conversion was determined from the concentration of the residual monomer using a Hewlett-Packard (HP-5890) Gas Chromatograph, equipped with an AT-Wax capillary column (30 m × 0.53 mm × 10 µm); DMF was used as the internal reference. In some cases the solvent (p-xylene) was used as the reference.

Molar mass and molar mass distributions were measured by Size Exclusion Chromatography ("SEC'), at ambient temperature using a Waters Gel Permeation Chromatograph ("GPC") equipped with a Waters model 510 pump and a model 410 differential refractometer (40 °C). THF was used as the eluent at a flow rate of 1.0 mL/min. A set of two linear columns (Mixed-C, Polymer Laboratories, 30 cm, 40 °C) was used. Calibration was carried out using narrow polydispersity polystyrene ("PS") standards ranging from 600 to 7 × 10⁶ g/mol and molar masses were calculated using the polystyrene standards and also the universal calibration principle and Mark-Houwink parameters (PMMA [poly(methyl methacrylate)]: K = 0.944 × 10⁻⁴ dL/g, a = 0.719). Data acquisition and processing were performed using Waters Millenium 32 software.

Matrix-assisted laser desorption/ionization (MALDI) time-of-flight (TOF) mass-spectrometry (MS) measurements were performed to determine the polymer composition on a Voyager-D(elayed) E(xtraction) STR (Applied Biosystems, Framingham, MA) instrument equipped with a 337 nm nitrogen laser. Positive-ion spectra were acquired in reflector mode. Dithranol was chosen as the matrix.

### Example I. Copolymerization of 1-octene and styrene

A typical RAFT copolymerization was carried out as follows: To a 50 ml three-neck round-bottom flask, the thiocarbonylthio compound, 2-cyanopropyl-2-yl dithiobenzoate (0.1475 g, 6.667 × 10⁻⁴ mol), *p*-xylene (2.5252 g, 2.378 × 10⁻² mol), styrene (3.6394 g, 3.494 × 10⁻² mol) and 1-octene (1.3071 g, 1.165 × 10⁻² mol) were added. After the reaction mixture was bubbled with argon for 30 min, the flask was immersed in a thermostated oil bath kept at 80 °C. The free radical source (initiator), 1,1'-azobiscyclohexanecarbonitrile (Vazo 88, Dupont, 0.0271 g, 1.111 × 10⁻⁴ mol) [Vazo 88 was dissolved in minimum amount of p-xylene] was added slowly via a degassed syringe. The reactions were carried out under a flowing argon atmosphere. Samples were withdrawn at suitable time periods throughout the polymerization. A pre-determined amount of the sample was transferred immediately after withdrawing into a GC vial and diluted with 1,4-dioxane or THF (depending on the monomer system), so as to determine the monomer conversion using gas chromatography technique. The remaining sample was diluted with THF, prior to SEC and matrix-assisted laser desorption/ ionization time-of-flight mass spectrometry (MALDI-TOF-MS) measurements. Results are given in Table 1.

### Comparative experiment A. Copolymerization of 1-octene and styrene

A typical free radical polymerization (FRP) was carried out as follows: To a 50 ml three-neck round-bottom flask, *p*-xylene (10.0 g, 9.44 × 10⁻² mol), styrene (3.6112 g, 3.467 × 10⁻² mol), and 1-octene (1.29 g, 1.156 × 10⁻² mol) were added. After the reaction mixture was bubbled with argon for 30 min, the flask was immersed in a thermostated oil bath kept at 80 °C and stirred for 10 min. The initiator, 1,1'-azobiscyclohexanecarbonitrile (Vazo 88, Dupont, 0.03648 g, 1.0 × 10⁻² mol/l) [Vazo 88 was dissolved in minimum amount of p-xylene] was added slowly via a degassed syringe. The reactions were carried out under a flowing argon atmosphere. Samples were withdrawn at suitable time periods throughout the polymerization. A pre-determined amount of the sample was transferred immediately after withdrawing into a GC vial and diluted with 1,4-dioxane or THF, so as to determine the monomer conversion using GC. The remaining sample was diluted with THF, prior to SEC and MALDI-TOF-MS measurements. The result of Comparative experiment A is given in Table 1.

**Table 1.**

| Copolymerization of 1-octene and styrene. Reaction time: 48 h. | | | | | |
|---|---|---|---|---|---|
| Example/Comparative experiment | Styrene (g) | 1-octene (g) | 1-Octene incorporated (mol %)* | Mₙ (g/mol) | M_{w}/Mₙ |
| I | 3.6112 | 1.2970 | 20.8 | 1728 | 1.2 |
| (RAFT) | (75 mol%) | (25 mol%) | | | |
| A | 3.6112 | 1.2970 | 9.0 | 24390 | 2.1 |
| (FRP) | (75 mol%) | (25 mol%) | | | |

| | | | | | |
|---|---|---|---|---|---|
| * These values have been calculated by using the monomer conversion data obtained from GC analysis. | | | | | |

The results in Table 1 show that copolymers comprising an α-olefin and styrene, produced by free-radical polymerization, feature a broader molecular weight distribution than the corresponding product produced by RAFT, the M_{w}/Mₙ being larger than 1.5.

### Example ll: Copolymerization of 1-Octene and MMA

A typical RAFT polymerization was carried out as follows: To a 50 ml three-neck round-bottom flask, the thiocarbonylthio compound, 2-cyanopropyl-2-yl dithiobenzoate (0.2212 g, 1.000 × 10⁻³ mol), *p*-xylene (2.4618 g, 2.319 × 10⁻² mol), MMA (3.5841 g, 3.579 × 10⁻² mol) and 1-octene (1.3390 g, 1.193 × 10⁻² mol) were added. After the reaction mixture was bubbled with argon for 30 min, the flask was immersed in a thermostated oil bath kept at 60 °C. The initiator, 2,2'-azobis-(2,4-dimethyl valeronotrile) (V-65) [Wako] (0.0207 g, 8.333 × 10⁻⁵ mol) [V-65 was dissolved in minimum amount of p-xylene] was added slowly via a degassed syringe. The reactions were carried out under a flowing argon atmosphere. Samples were withdrawn at suitable time periods throughout the polymerization. A pre-determined amount of the sample was transferred immediately after withdrawing into a GC vial and diluted with 1,4-dioxane or THF (depending on the monomer system), so as to determine the monomer conversion using Gas chromatography technique. The remaining sample was diluted with THF, prior to size exclusion chromatography (SEC) and matrix-assisted laser desorption/ionization time-of-flight mass spectrometry (MALDI-TOF-MS) measurements. Results are given in Table 2.

### Comparative experiment B. Copolymerization of 1-octene with MMA

A typical free radical polymerization (FRP) was carried out as follows: To a 50 ml three-neck round-bottom flask, *p*-xylene (9.99 g, 9.41 × 10⁻² mol), methyl methacrylate (3.6380 g, 3.633 × 10⁻² mol), and 1-octene (1.3591 g, 1.211 × 10⁻² mol) were added. After the reaction mixture was bubbled with argon for 30 min, the flask was immersed in a thermostated oil bath kept at 90 °C. The initiator, 1,1'-azobiscyclohexanecarbonitrile (Vazo 88) [Dupont] (0.03664 g, 1.0 × 10⁻² mol/l) [Vazo 88 was dissolved in minimum amount of p-xylene] was added slowly via a degassed syringe. The reactions were carried out under a flowing argon atmosphere. Samples were withdrawn at suitable time periods throughout the polymerization. A pre-determined amount of the sample was transferred immediately after withdrawing into a GC vial and diluted with 1,4-dioxane or THF, so as to determine the monomer conversion using GC. The remaining sample was diluted with THF, prior to SEC and MALDI-TOF-MS measurements. The result of Comparative experiment B is given in Table 2.

**Table 2:**

| Copolymerization of 1-octene and MMA. Reaction time: 22 h. (Example II), 25 h. (Comparitive Experiment B). | | | | | |
|---|---|---|---|---|---|
| Example or comparative experiment | MMA (g) | Oct (g) | 1-Octene incorporated (mol %)* | Mn (g/mol) | Mw/Mn |
| II | 3.5841 | 1.3390 | 6.3 | 2232 | 1.3 |
| (RAFT) | (75 mol%) | (25 mol%) | | | |
| B | 3.5841 | 1.3390 | 8.2 | 17707 | 2.7 |
| (FRP) | (75 mol%) | (25 mol%) | | | |

| | | | | | |
|---|---|---|---|---|---|
| * These values have been calculated by using the monomer conversion data obtained from GC analysis. | | | | | |

## Claims

1. Process for the copolymerisation of at least one α-olefin with at least one vinyl monomer comprising at least one hetero atom chosen from the group consisting of Si, O, N, and halogen, and/or at least one optionally substituted aryl group, which vinyl monomer is susceptible to free-radical polymerization (vinyl monomer R), **characterized in that** the copolymerisation is performed in the presence of a source of free radicals and at least one thiocarbonylthio compound comprising the structural unit ―C(=S)-S-.

2. Process according to claim 1 wherein the thiocarbonylthio compound is of formula (I) or (ll):
(Z-C(=S)-S)ₚ-R (I)
Z'-(C(=S)-S-R)ₘ (II)
wherein
Z is selected from the group comprising hydrogen, halogen, optionally substituted alkyl, optionally substituted aryl, optionally substituted heterocyclyl, optionally substituted alkylthio, optionally substituted alkoxycarbonyl, optionally substituted aryloxycarbonyl (-COOR'), carboxy (-COOH), optionally substituted acyloxy (-O₂CR'), optionally substituted carbamoyl (-CONR'₂), cyano (-CN), dialkyl- or diaryl- phosphonato
[-P(=O)OR'₂], dialkyl- or diaryl-phosphinato [-P(=O)R'₂], and a polymer chain formed by any mechanism;
• Z' is a m-valent moiety derived from a member of the group comprising optionally substituted alkyl, optionally substituted aryl and a polymer chain; where the connecting moieties are selected from the group that comprises aliphatic carbon, aromatic carbon, and sulfur;
• R is a free-radical leaving group that initiates free radical polymerization;
• R' is selected from the group comprising optionally substituted C1-C18 alkyl, C2-C18 alkenyl, aryl, heterocyclyl, aralkyl, alkaryl, wherein the substituents are independently selected from the group that comprises epoxy, hydroxy, alkoxy acyl, acyloxy, carboxy (and salts), sulfonic acid (and salts), alkoxy- or aryloxycarbonyl, isocyanato, cyano, silyl, halo, and dialkylamino;
• p is an integer with p ≥ 1; and
• m is an integer with m ≥ 2.

3. Process according to claim 2 or claim 3, wherein the α-olefin is a compound with formula CH₂=CH-R' in which R' represents an unsubstituted linear alkyl with 2-6 carbon atoms.

4. Process according to any one of claims 1-3, wherein the vinyl monomer R is chosen from the group comprising an acrylate ester, a methacrylate ester, acrylic acid, methacrylic acid, styrene, acrylamide, methacrylamide, and methacrylonitrile.

5. Process according to any one of claims 1-4, wherein the molar ratio α-olefin : vinyl monomer R is between 5:95 and 95:5.

6. Process according to any one of claims 1-5, wherein the process is performed at a temperature between 40 and 160 °C.

7. Copolymer comprising at least one α-olefin and at least one vinyl monomer R, **characterised in that** the copolymer has an M_{w}/Mₙ smaller than 1.5.

8. Copolymer according to claim 7, wherein the Mₙ is between 500 and 200,000 g/mol.

9. Copolymer according to claim 7 or claim 8, wherein the α-olefin : vinyl monomer R molar ratio in the copolymer is between 95:5 and 5:95.

10. Use of a copolymer according to any one of claims 7-9 in a coating composition.

11. Use of a copolymer according to any one of claims 7-9 as a compatibilizer.
